(19) Europäisches Patentamt
European Patent Office
Office européen des brevets

(11) Veröffentlichungsnummer: **0 134 753**
**B1**

(12) # EUROPÄISCHE PATENTSCHRIFT

(45) Veröffentlichungstag der Patentschrift: **13.05.87**

(51) Int. Cl.⁴: **C 09 B 3/04,** C 07 C 45/71, C 07 C 49/665

(21) Anmeldenummer: **84810333.9**

(22) Anmeldetag: **06.07.84**

(54) **Verfahren zur Herstellung von Benzanthron.**

(30) Priorität: **12.07.83 CH 3820/83**

(43) Veröffentlichungstag der Anmeldung: **20.03.85 Patentblatt 85/12**

(45) Bekanntmachung des Hinweises auf die Patenterteilung: **13.05.87 Patentblatt 87/20**

(84) Benannte Vertragsstaaten: **BE CH DE FR GB IT LI NL**

(56) Entgegenhaltungen:
**EP - A - 0 022 062**
**CH - A - 211 920**
**CH - A - 214 898**
**FR - A - 2 371 413**
**US - A - 1 896 147**

**HOUBEN-WEYL, "Methoden der organischen Chemie, Band VII/3c, 1979, Seiten 271-272, Georg Thieme Verlag, Stuttgart, DE; O. BAYER: "Chinone", Teil III;**

(73) Patentinhaber: **CIBA-GEIGY AG, Klybeckstrasse 141, CH-4002 Basel (CH)**

(72) Erfinder: **Bürli, Martin, Dr., Juchstrasse 10, CH-4312 Magden (CH)**
Erfinder: **Bersier, Jacques, Dr., Gstaltenrainweg 61, CH-4125 Riehen (CH)**
Erfinder: **Plattner, Eric, Prof. Dr., Jurastrasse 18, CH-4411 Seltisberg (CH)**
Erfinder: **Herrmann, Hans-Ulrich, Referenzgässli 5, CH-4058 Basel (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

**Beschreibung**

Die vorliegende Erfindung betrifft ein Verfahren zur Herstellung von Benzanthron ausgehend von Anthrachinon, Glycerin und Anthron.

Benzanthron ist ein wichtiges Zwischenprodukt für die Herstellung von Küpenfarbstoffen. Bisher wurde die Verbindung durch Umsetzen von Anthrachinon und Glycerin in Gegewart von Schwermetallen bzw. deren Salzen hergestellt. Bei der Aufarbeitung fallen somit verdünnte Metallsalzlösungen an, deren Entsorgung problematisch ist.

So werden z.B. Metalle wie Eisen, Zink, oder Kupfer in konzentrierter Schwefelsäure zur reduktiven Überführung von Anthrachinon in die Semichinonform verwendet. Derartige Verfahren sind u.a. beschrieben im US-Patent 1 896 147 (Reduktionsmittel Eisenstaub), US-Patent 2 034 485 und UdSSR-Patent 401 130 (Reduktionsmittel Eisen- bzw. Kupferpulver), A. M. Lahin, Zhur. Obschei Khim. 18, 308 (1948), vgl. CA 44, 1079b (Reduktionsmittel Zn, Al, $CuSO_4$) und US-Patent 1 791 309 (Reduktionsmittel Zn oder Al in Kombination mit Cu). Von diesen hat das Eisen als Reduktionsmittel die grösste praktische Bedeutung erlangt. Jedoch bringt die Verwendung von Eisen als Reduktionsmittel grosse wirtschaftliche und ökologische Nachteile mit sich, da mindestens 2 Mol Eisen pro Mol Anthrachinon eingesetzt werden müssen. Dies bedingt, dass z.B. pro Mol hergestelltem Benzanthron 2,0 Mol Eisensulfat oder auf 1000 g hergestelltes Benzanthron mindestens 1320 g Eisensulfat als Abfallprodukt anfallen.

Als Alternative dazu wurde ein Verfahren zur Herstellung von Benzanthron auf elektrochemischem Wege vorgeschlagen, das in den europäischen Patentanmeldungen EP-0 010 525 und EP-0 022 062 beschrieben ist. Das elektrochemische Verfahren erfordert jedoch spezielle, kostenintensive Apparaturen und ist zudem in der Verfahrensführung relativ aufwendig.

Aufgabe war es daher, ein Verfahren zur Herstellung von Benzanthron zu entwickeln, das einfach in der Durchführung ist und keine speziellen Anlagen benötigt, dabei jedoch möglichst so sauber abläuft wie das elektrochemische Verfahren, und somit die eingangs genannten Nachteile der bekannten Verfahren nicht aufweist.

Die Lösung dieser Aufgabe besteht darin, dass Anthrachinon und Glycerin und/oder Acrolein unter reduktiven Bedingungen zu Benzanthron umgesetzt werden, wobei jedoch anstelle von Metallen bzw. Metallsalzen als Reduktionsmittel Anthron eingesetzt wird. Anthron reduziert das Anthrachinon zum Oxanthron und geht dabei selbst in die Semichinonform über (siehe Formelschema), ist damit Reduktionsmittel und in oxidierter Form gleichzeitig auch Ausgangsmaterial.

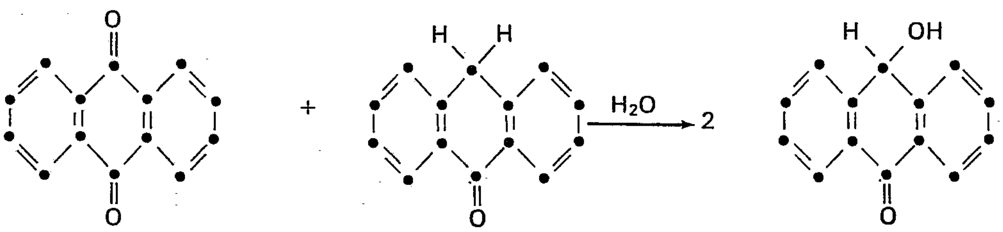


Anthrachinon Anthron Oxanthron

Das erfindungsgemässe Verfahren besteht somit darin, dass Anthrachinon und Glycerin und/oder Acrolein in konzentrierter Schwefelsäure in Gegenwart von Anthron zu Benzanthron nach folgendem Reaktionsschema umgesetzt werden:

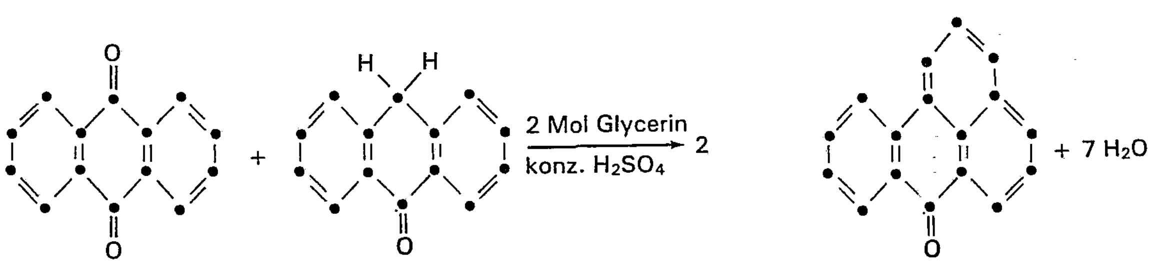


Da das Reduktionsmittel selbst zum Endprodukt weiterreagiert, fallen keine schwerzubeseitigenden Metallsalze an, zudem kann die Schwefelsäure problemlos wieder aufonzentriert und rezykliert werden.

Das Anthron (hergestellt z.B. durch katalytische Hydrierung von Anthrachinon — gemäss EP-A 0 007 041) wird vorteilhaft im Überschuss eingesetzt. Auf 1 Mol Anthrachinon verwendet man bevorzugt 1,2 bis 2,3 Mol, insbesondere 1,4 bis 1,8 Mol Anthron. Natürlich kann man auch von äquimolaren Mengen an Anthrachinon und Anthron ausgehen, es muss dann jedoch ein gewisser Restgehalt an nichtumgesetztem Anthrachinon in Kauf genommen werden.

Auch was das Glycerin anbetrifft wird bezogen auf die Gesamtmenge an Antrachinon und Anthron vorteilhaft mit einem Überschuss gearbeitet, allerdings kommt man, verglichen mit dem eingangs erwähnten elektrochemischen Verfahren, mit bedeutend weniger Glycerin aus. Man verwendet bevorzugt 1,1 bis 1,5 Mol, insbesondere 1,3 Mol Glycerin pro Mol Anthrachinon/Anthron-Gemisch.

Das Glycerin wird bevorzugt gleichzeitig mit dem Anthron zum Anthrachinon gegeben. Da die Reaktion in konzentrierter Schwefelsäure durchgeführt wird, zweckmässigerweise verwendet man Schwefelsäure einer Konzentration von 80 bis 95%, dehydratisiert das Glycerin zu Acrolein, so dass ein Teil des Glycerins oder auch die gesamte Glycerinmenge durch Acrolein ersetzt werden kann.

Durchgeführt wird die Benzanthronsynthese nach dem erfindungsgemässen Verfahren vorteilhaft bei einer Temperatur von 100° bis 200°C, insbesondere 120° bis 160°C. Die Temperaturen unter 100°C sind zu vermeiden, da es sonst zu einer Akkumulation von Ausgangsmaterial kommen kann, das dann unkontrolliert mit einer gewissen Verzögerung unter starker Gas- und Schaumentwicklung reagiert.

Neben unsubstituiertem Anthrachinon kommen als Ausgangsmaterial auch solche Anthrachinone in Frage, die einen oder mehrere Substituenten aufweisen. Als Substituenten kommen beispielsweise in Betracht: Niederalkyl, bzw. Niederalkoxy, wie die Methyl- oder Äthylgruppe bzw. der Methoxy-, Äthoxy-, n- oder iso-Propoxy- oder der Butoxyrest; ferner Halogen, wie Fluor, Chlor oder Brom, der Phenylrest oder die Hydroxygruppe. Wird ein möglichst einheitliches Endprodukt angestrebt, so sollten bei Verwendung von Anthrachinonderivaten auch entsprechend substituierte Anthrone eingesetzt werden.

Das erfindungsgemässe Verfahren wird beispielsweise wie folgt durchgeführt: Anthrachinon wird in ca. 85%iger Schwefelsäure suspendiert und die Suspension auf eine Temperatur von etwa 120° bis 160°C erhitzt. Zur heissen Suspension werden anschliessend gleichzeitig Glycerin und vorteilhaft geschmolzenes Anthron während mehrerer Stunden langsam zugegeben. Da das geschmolzene Anthron oxydationsempfindlich ist wird zweckmässigerweise unter Inertgas (z.B. Stickstoff oder Argon) gearbeitet.

Wenn die Reaktion abgeklungen ist, lässt man das Reaktionsgemisch auf etwa 120°C abkühlen und dann in die ein- bis zweifache Menge Wasser einlaufen, wobei die Temperatur des Wassers durch Kühlen im Bereich von 50° bis 80°C gehalten wird. Das dabei ausfallende Benzanthron filtriert man ab und wäscht mit heissem Wasser neutral. Anschliessend kann das rohe Benzanthron durch Auskochen mit Natronlauge gereinigt werden. Auf diese Weise erhält man ein sehr reines Produkt mit einem Gehalt von > 97%, in einer Ausbeute von ca. 90% bezogen auf die Gesamtmenge an Anthrachinon und Anthron. Eine weitere Rinigung des Produktes durch Destillation oder Sublimation — im Rahmen der aus dem Stand der Technik bekannten Verfahren oftmals notwendig — erübrigt sich im vorliegenden Fall. Die nach Abtrennen des Benzanthrons zurückbleibende verdünnte Schwefelsäure kann z.B. über einen Dünnschichtverdampfer aufkonzentriert und für einen folgenden Ansatz wiederverwendet werden.

Die Erfindung wird durch die folgenden Beispiele erläutert; Teile bedeuten Gewichtsteile und Prozente Gewichtsprozente.

*Beispiel 1*

In einem mit Rührer und Dosiertropftrichter versehenen Reaktionskessel werden 2100 Teile 85%ige Schwefelsäure vorgelegt. Tropftrichter und Kessel sind beheizbar und werden zu Beginn mit Stickstoff gespült. In die Schwefelsäure trägt man unter Rühren 131,6 Teile Anthrachinon ein und beginnt den Kesselinhalt auf eine Temperatur von 130° bis 140°C aufzuheizen. Gleichzeitig wird der Tropftrichter mit 194 Teilen Anthron gefüllt, das anschliessend unter Stickstoffatmosphäre geschmolzen wird. Die Temperatur des Wärmeüberträgers im Heizmantel des Tropftrichters wird auf 215° bis 220°C eingestellt. Ist die Temperatur im Reaktionskessel auf 130°C gestiegen, stellt man die Stickstoffzufuhr ab und beginnt mit der Zugabe von Anthron und Glycerin. Zunächst lässt man 9,8 Teile Glycerin rasch einlaufen und dosiert dann langsam, während $1^1/_2$ Stunden 185,6 Teile Glycerin und das flüssige Anthron aus dem Tropftrichter zur heissen Anthrachinonsuspension. Man lässt noch eine Stunde nachragieren und erniedrigt dann die Temperatur des Reaktionsgemisches von 135° bis 140°C (Reaktionstemperatur) auf 120°C.

Zur Aufarbeitung lässt man das Reaktionsgemisch in 1143 Teile Wasser einlaufen, dessen Temperatur mittels Kühlung auf 50° bis 70°C gehalten wird. Das ausgefallene Benzanthron filtriert man ab, wäscht den Filterkuchen neutral und trocknet anschliessend das Produkt. Zur Reinigung wird das rohe Benzanthron mit einem Gehalt von ca. 90% während 2 Stunden in verdünnter Natronlauge im Autoklaven bei einer Temperatur von 140° bis 145°C ausgekocht. Danach bei 70°C abfiltriert und das Nutschgut mit Wasser neutralgewaschen. Nach dem Trocknen erhält man 347 Teile Benzanthron mit einem Gehalt von 97 bis 98%. Die Ausbeute, bezogen auf die Gesamtmenge an Anthrachinon und Anthron, beträgt 92%. Schmelzpunkt: 174°C.

*Beispiel 2*

In einem mit Rührer und Dosiertropftrichter versehenen Reaktionskessel werden 126 Teile Anthrachinon vorgelegt. Tropftrichter und Kessel sind beheizbar und werden zu Beginn mit Stickstoff gespült. Zum Anthrachinon werden 898 teile 98%ige Schwefelsäure und anschliessend 102 Teile Wasser gegeben. In den Tropftrichter werden 194 Teile Anthron eingewogen und geschmolzen. Der Kesselinhalt wird auf 130°C erhitzt und dann mit der simultanen Dosierung von Anthron und Glycerin begonnen. Zunächst lässt man 9,5 Teile Glycerin rasch einlaufen und dosiert dann langsam, während $1^1/_2$ Stunden 180,2 Teile Glycerin und die Anthronschmelze auf die heisse Anthrachinon-Schwefelsäure-Suspension. Man lässt noch eine Stunde nachreagieren und erniedrigt dann die Temperatur der Reaktionslösung von der Reaktionstemperatur, 135° bis 140°C, auf

120°C. Zur Aufarbeitung lässt man das Reaktionsgemisch in 500 Teile Wasser einlaufen, dessen Temperatur mittels Kühlung auf 50° bis 70°C gehalten wird. Das ausgefallene Benzanthron filtriert man ab und wäscht den Filterkuchen neutral. Zur Reinigung wird das rohe Benzanthron mit einem Gehalt von ca. 90% (Trockengehalt) während 2 Stunden in verdünnter Natronlauge im Autoklaven bei einer Temperatur von 140° bis 145°C ausgekocht. Danach bei 70°C abfiltriert und das Nutschgut mit Wasser neutralgewaschen. Nach dem Trocknen erhält man 333 Teile Benzanthron mit einem Gehalt von 97 bis 98%. Die Ausbeute, bezogen auf die Gesamtmenge an Anthrachinon und Anthron, beträgt 89%. Schmelzpunkt: 174°C.

*Beispiel 3*

In einem mit Rührer und Dosiertropftrichter versehenen Reaktionskessel werden 129,3 Teile Anthrachinon vorgelegt. Tropftrichter und Kessel sind beheizbar und werden zu Beginn mit Stickstoff gespült. Zum Anthrachinon werden 898 Teile 98%ige Schwefelsäure gegeben. Anschliessend werden 102 Teile Wasser zugesetzt. In den Tropftrichter werden 186,9 Teile Anthron eingewogen und geschmolzen. Der Kesselinhalt wird auf 130°C erhitzt und dann mit der simultanen Dosierung von Anthron und Glycerin begonnen. Zunächst lässt man 10 Teile Glycerin rasch einlaufen und dosiert dann langsam während 3 Stunden 166 Teile Glycerin und die Anthronschmelze auf die heisse Anthrachinon-Schwefelsäure-Suspension. Man lässt noch eine Stunde nechreagieren und erniedrigt dann die Temperatur der Reaktionslösung von 135° bis 140°C auf 120°C.

Zur Aufarbeitung lässt man das Reaktionsgemisch in 500 Teile Wasser einlaufen, dessen Temperatur mittels Kühlung auf 50° bis 80°C gehalten wird. Das ausgefallene Benzanthron filtriert man bei 70°C ab und wäscht den Filterkuchen neutral.

Man kann aber auch zunächst nur die Hälfte des Wassers vorlegen, das Reaktionsgemisch bei 50° bis 80°C zulaufen lassen und anschliessend das restliche Wasser zugeben. Auf die Weise erhält man eine besser filtrierbare Reaktionsmasse.

Zur Reinigung wird das rohe Benzanthron mit einem Gehalt von 50% (Trockengehalt) während 2 Stunden in verdünnter Natronlauge im Autoklaven bei einer Temperatur von 140° bis 145°C ausgekocht. Danach wird bei 70°C abfiltriert und das Nutschgut mit Wasser neutralgewaschen. Nach dem Trocknen erhält man 333 Teile Benzanthron mit einem Gehalt von 97 bis 98%. Die Ausbeute, bezogen auf die Gesamtmenge an Anthrachinon und Anthron, beträgt 92%. Schmelzpunkt: 174°C.

*Beispiel 4*

In einem Glasreaktor mit Rührer werden 477 Teile Schwefelsäure 88% vorgelegt. Dazu werden 52,1 Teile Methyl-anthron (β-Methyl-anthron als Hauptkomponente) gegeben. Die Temperatur wird bei 20° bis 25°C gehalten. Es wird gerührt bis eine Lösung entsteht. Nun werden 16,8 Teile Wasser zugetropft. Zu dieser Lösung lässt man 49,9 Teile Glycerin zutropfen.

In einem Reaktionskessel mit Rührer werden 34,7 Teile Anthrachinon vorgelegt. Dazu werden 100 Teile Schwefelsäure 85% gegeben. Der Kesselinhalt wird auf 135° bis 140°C erhitzt, worauf innerhalb einer Stunde die Methyl-anthron-Glycerin-Schwefelsäure-Mischung zudosiert wird. Die Temperatur wird dabei bei 135° bis 140°C gehalten. Anschliessend lässt man 30 Minuten bei 135°C nachrühren.

Zur Aufarbeitung lässt man das Reaktionsgemisch auf 120°C abkühlen und trägt innert 30 Minuten auf 276,5 Teile Wasser aus, welches zwischen 50° und 80°C gehalten wird. Anschliessend werden bei 80°C weitere 276,5 Teile Wasser zugegeben. Man lässt erkalten, filtriert das Reaktionsprodukt ab und wäscht mit Wasser neutral. Das feuchte Rohprodukt (47,5% Trockengehalt) wird in 888 Teilen Chloroform eingerührt. Nach Filtration wird das Filtrat 3mal mit 500 Teilen NaOH 3% ausgeschüttelt. Anschliessend wird die organische Phase mit Wasser neutral gewaschen, über Calciumchlorid getrocknet und danach das Lösungsmittel abgedampft. Nach dem Trocknen erhält man ein Produktgemisch aus Benzanthron und Methylbenzanthron mit einer Reinheit von ca. 70%, das bei einer Temperatur von 115°C zu sintern und bei 150°C zu schmelzen beginnt.

**Patentansprüche**

1. Verfahren zur Herstellung von Benzanthron durch Umsetzen von Anthrachinon mit Glycerin und/oder Acrolein in Gegenwart eines Reduktionsmittels in konzentrierter Schwefelsäure als Reaktionsmedium, dadurch gekennzeichnet, dass man als Reduktionsmittel Anthron verwendet.

2. Verfahren gemäss Anspruch 1, dadurch gekennzeichnet, dass man bezogen auf Anthrachinon mit einem Überschuss an Anthron arbeitet.

3. Verfahren gemäss Anspruch 2, dadurch gekennzeichnet, dass das Molverhältnis von Anthron zu Anthrachinon 1,2 bis 2,3 beträgt.

4. Verfahren gemäss Anspruch 1, dadurch gekennzeichnet, dass man pro Mol Anthrachinon/Anthron-Gemisch 1,1 bis 1,5 Mol Glycerin verwendet.

5. Verfahren gemäss Anspruch 1, dadurch gekennzeichnet, dass man die Reaktion bei einer Temperatur von 100° bis 200°C, insbesondere 120° bis 160°C durchführt.

6. Verfahren gemäss Anspruch 1, dadurch gekennzeichnet, dass man Anthrachinon in Schwefelsäure vorlegt und gleichzeitig Glycerin und Anthron zudosiert.

**Claims**

1. A process for the production of benzanthrone by reacting anthraquinone with glycerol and/or acrolein in the presence of a reducing agent, in concentrated sulfuric acid as reaction medium, wherein anthrone is used as reducing agent.

2. A process according to claim 1, wherein an excess of anthrone is used, based on anthraquinone.

3. A process according to claim 2, wherein the molar ratio of anthrone to anthraquinone is 1.2 to 2.3.

4. A process according to claim 1, wherein 1.1 to 1.5 moles of glycerol are used per mole of anthraquinone/anthrone mixture.

5. A process according to claim 1, wherein the reaction is carried out in the temperature range from 100° to 200°C, preferably from 120° to 160°C.

6. A process according to claim 1, wherein glycerol and anthrone are simultaneously added to anthraquinone in sulfuric acid.

**Revendications**

1. Procédé de préparation de la benzanthrone par réaction de l'anthraquinone avec le glycérol et/ou l'acroléïne, en présence d'un agent réducteur, dans de l'acide sulfurique concentré à titre de milieu réactionnel, caractérisé en ce que l'on utilise de l'anthrone comme agent réducteur.

2. Procédé conforme à la revendication 1, caractérisé en ce que l'on opère avec un excès d'anthrone par rapport à l'anthraquinone.

3. Procédé conforme à la revendication 2, caractérisé en ce que le rapport molaire de l'anthrone à l'anthraquinone est compris entre 1,2 et 2,3.

4. Procédé conforme à la revendication 1, caractérisé en ce que l'on utilise, par mole du mélange d'anthraquinone et d'anthrone, entre 1,1 et 1,5 mole de glycérol.

5. Procédé conforme à la revendication 1, caractérisé en ce que l'on effectue la réaction à une température comprise entre 100 et 200°C, en particulier entre 120 et 160°C.

6. Procédé conforme à la revendication 1, caractérisé en ce que l'on dispose au préalable l'anthraquinone dans l'acide sulfurique, et on ajoute simultanément le glycérol et l'anthrone.